# FASCICULE DE BREVET EUROPEEN

(11) **EP 3 373 459 B1**
(45) Date de publication et mention de la délivrance du brevet: **09.10.2019**
(21) Numéro de dépôt: 17188033.9
(22) Date de dépôt: 25.08.2017
(51) Int. Cl.: H04B 5/00, G06K 7/10, H02J 50/10, H02J 7/02, H02H 9/04

(54) **PROTECTION D'UN ROUTEUR NFC CONTRE DES SURTENSIONS**
SCHUTZ EINES NFC-ROUTERS GEGEN ÜBERLASTSPANNUNGEN
PROTECTION OF AN NFC ROUTER AGAINST OVERVOLTAGES

(30) Priorité: 10.03.2017 FR 1751995
(43) Date de publication de la demande: 12.09.2018
(73) Titulaire: STMICROELECTRONICS (ROUSSET) SAS, 13790 Rousset (FR)
(72) Inventeur: TRAMONI, Alexandre, 83330 Le Beausset (FR)
(74) Mandataire: Cabinet Beaumont

(56) Documents cités:
- US-A1- 2015 054 345
- US-A1- 2016 087 430

## Description

### Domaine

La présente description concerne de façon générale les circuits électroniques et les équipements mobiles de communications et, plus particulièrement, les dispositifs équipés de circuits de communication en champ proche (NFC - Near Field Communication) .

La présente description s'applique plus particulièrement à des dispositifs incluant un circuit de communication en champ proche et une batterie rechargeable.

### Exposé de l'art antérieur

De nombreux dispositifs sont désormais proposés avec des fonctions de communication en champ proche. Les plus répandus sont les dispositifs mobiles de télécommunication (téléphones mobiles ou smartphones) qui sont de plus en plus souvent équipés d'une interface de communication en champ proche, généralement dénommée routeur NFC, conférant au téléphone des fonctionnalités supplémentaires. Les routeurs NFC permettent à un dispositif mobile de fonctionner soit en mode carte, le dispositif ayant alors les fonctions d'une carte de communication sans contact, soit en mode lecteur, le dispositif ayant alors les fonctions d'un terminal de lecture et/ou écriture de carte sans contact.

En mode lecteur, le dispositif utilise sa batterie rechargeable pour émettre un champ haute fréquence susceptible d'être capté par un autre dispositif fonctionnant en mode carte.

En mode carte, le dispositif mobile de communication est susceptible de fonctionner en étant alimenté par le champ rayonné par un terminal avec lequel il communique et sans recourir à l'énergie de la batterie du dispositif. Cela permet notamment de conférer à un téléphone mobile des fonctions similaires à celles des cartes sans contact alors même que le téléphone est déchargé ou éteint. Dans les dispositifs récents, le dispositif peut également fonctionner en mode carte en utilisant la batterie du dispositif, le champ électromagnétique étant utilisé pour la communication.

La batterie du dispositif est généralement chargée en étant raccordée, par l'intermédiaire d'un chargeur, au réseau de distribution électrique, à une dynamo, à un panneau solaire, etc.

Plus récemment, on a vu apparaitre des dispositifs NFC équipés de batteries, dont les batteries sont rechargées en champ proche, en utilisant pour la recharge une bande de fréquences différente de la bande de fréquences utilisée pour les communications.

Le document US2016/087430 décrit un système de protection contre les surtensions pour dispositif NFC.

Le document US2015/0054345 décrit un système et un procédé pour une coexistence efficace de communications de données et de transfert d'énergie sans fil.

### Résumé

Il serait souhaitable de pallier tout ou partie des inconvénients des dispositifs alliant batterie et interface de communication en champ proche.

L'invention est définie par la revendication indépendante. Des modes de réalisation sont décrits dans les revendications dépendantes. Ainsi, un mode de réalisation prévoit un dispositif de protection d'un routeur de communication en champ proche contre d'éventuelles surtensions captées par une antenne, comportant :
deux éléments limiteurs de tension entre des bornes de l'antenne et une masse ; et
un circuit de détection de présence d'un champ électromagnétique aux environs d'une fréquence de fonctionnement du routeur, et de commande des éléments limiteurs, les éléments limiteurs étant actifs par défaut.

Selon un mode de réalisation, chaque élément limiteur comporte un ou plusieurs composants limiteurs de tension, en série avec un interrupteur commandable par le circuit de détection.

Selon un mode de réalisation, le circuit de détection comporte :
un élément de détection de champ et d'extraction d'horloge ; et
un comparateur dont une première entrée reçoit un signal de l'élément de détection et dont une deuxième entrée reçoit une horloge de référence correspondant approximativement à ladite fréquence de fonctionnement du routeur.

Selon un mode de réalisation, le comparateur commande les éléments limiteurs.

Selon un mode de réalisation, le circuit de détection est alimenté par une batterie.

Selon un mode de réalisation, la fréquence de fonctionnement du routeur est d'environ 13,56 MHz.

Un mode de réalisation prévoit un dispositif de communication en champ proche, comportant :
au moins une antenne ;
un routeur de communication en champ proche connecté à l'antenne ; et
un dispositif de protection du routeur contre d'éventuelles surtensions captées par l'antenne.

Un mode de réalisation prévoit un dispositif portable de communication comportant un dispositif de protection d'un routeur de communication en champ proche contre d'éventuelles surtensions captées par une antenne.

Un mode de réalisation prévoit un dispositif portable de communication comportant un dispositif de communication en champ proche.

Un mode de réalisation prévoit un procédé de protection d'un routeur de communication sans contact contre d'éventuelles surtensions, comportant les étapes de :
limiter par défaut la tension aux bornes d'une antenne à laquelle est connecté le routeur ; et
désactiver la limitation de la tension aux bornes de l'antenne en présence d'un champ aux environs d'une fréquence de fonctionnement du routeur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma-bloc partiel et schématique d'un exemple de dispositif électronique du type auquel s'applique les modes de réalisation qui vont être décrits ; et
la figure 2 est un schéma-bloc illustrant un mode de réalisation d'un circuit de protection d'un routeur NFC.

### Description détaillée

De mêmes éléments ont été désignés par de mêmes références aux différentes figures.

Par souci de clarté, seuls les étapes et éléments utiles à la compréhension des modes de réalisation qui vont être décrits ont été représentés et seront détaillés. En particulier, le fonctionnement d'un routeur de communication en champ proche n'a pas été détaillé, les modes de réalisation décrits étant compatibles avec le fonctionnement usuel. De plus, les applications d'un dispositif ou système intégrant un tel routeur n'ont pas non plus été détaillées, les modes de réalisation décrits étant, là encore, compatibles avec les applications usuelles.

Sauf précision contraire, lorsque l'on fait référence à deux éléments connectés entre eux, cela signifie directement connectés sans élément intermédiaire autre que des conducteurs, et lorsque l'on fait référence à deux éléments reliés entre eux, cela signifie que ces deux éléments peuvent être directement reliés (connectés) ou reliés par l'intermédiaire d'un ou plusieurs autres éléments.

Dans la description qui suit, lorsqu'on fait référence aux termes "approximativement", "environ" et, "de l'ordre de", cela signifie à 10 % près, de préférence à 5 % près.

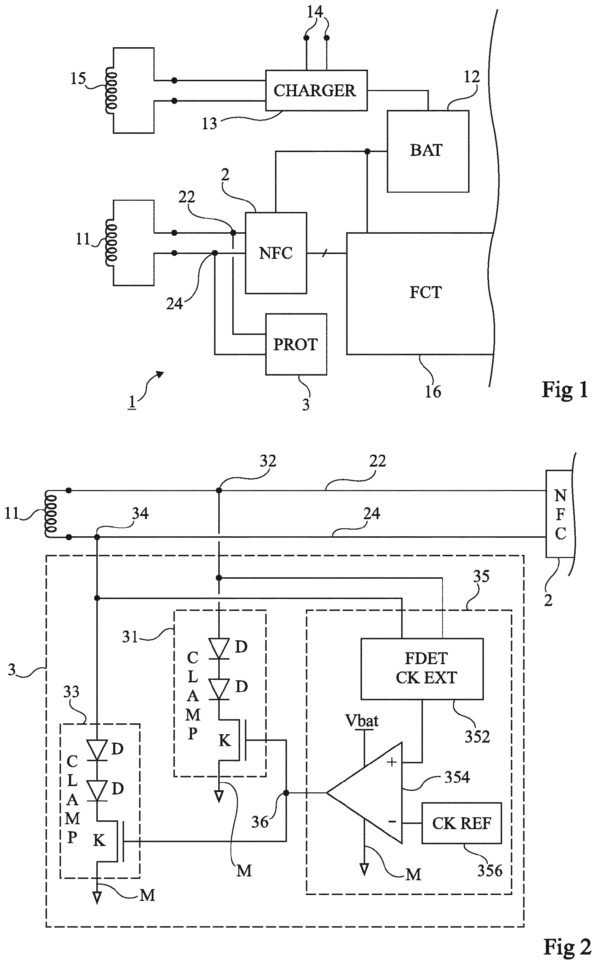

La figure 1 est une représentation schématique et sous forme de blocs d'un système de communication en champ proche illustrant partiellement un mode de réalisation d'un dispositif mobile équipé d'une batterie et d'un module de communication en champ proche.

Le dispositif 1 comporte, entre autres, une interface de communication en champ proche 2 (NFC) connectée à une antenne 11 pour communiquer avec un terminal (non représenté) lorsque le dispositif 1 est à faible distance du terminal. Le dispositif 1 comprend en outre une batterie 12 pour faire fonctionner ce dispositif indépendamment du mode de communication en champ proche.

La batterie 12 peut être chargée au moyen d'un chargeur 13 (CHARGER) équipant le dispositif 1 et recevant une tension continue de bornes 14 destinées à être raccordées à un transformateur extérieur (non représenté). La batterie 12 peut également être chargée en champ proche en captant, à l'aide d'une antenne 15, l'énergie rayonnée par une borne ou terminal (non représenté) de recharge.

Le dispositif 1 comporte en outre divers circuits de traitement en fonction de sa nature. Ces circuits ont été symbolisés en figure 1 par un bloc 16 (FCT) . Ces circuits sont susceptibles d'être alimentés par la batterie 12 et, au moins pour certains d'entre eux, de communiquer avec le routeur NFC 2.

Le chargeur 13 de la batterie 12 est généralement un système de régulation de tension permettant de fournir à la batterie 12 une tension de charge adaptée et de contrôler la charge de la batterie.

De plus en plus de dispositifs équipés de fonctions de communication en champ proche, par exemple les téléphones portables, sont susceptibles d'être rechargés en champ proche par des bornes dédiées, différentes des terminaux de communication, et comportent donc deux antennes 11 et 15.

Les bornes de recharge sont généralement plus puissantes que les terminaux de communication. Elles utilisent une fréquence ou une bande de fréquences différentes de la bande utilisée pour les communications selon la norme NFC (autour d'une fréquence de l'ordre 13,56 MHz).

Dans certains cas, la fréquence de recharge est suffisamment éloignée de la bande de fréquences de communication pour ne pas être captée par l'antenne 11 de communication ou pour être captée avec un facteur de qualité si faible que cela ne pose pas de problème.

Toutefois, certaines bornes de recharge opèrent à des fréquences (typiquement de plusieurs MHz, par exemple de l'ordre de 6,8 MHz) qui sont proches de la bande de fréquences de communication.

Un problème est alors que l'énergie rayonnée par la borne de recharge est captée par l'antenne 11 et est susceptible d'endommager le routeur NFC 2. En effet, les bornes de recharge sont faites pour recharger le plus rapidement possible la batterie 12 et la puissance du champ est nettement plus importante que celle des terminaux de communication en champ proche.

Selon les modes de réalisation décrits, on prévoit d'équiper le dispositif 1 d'un circuit 3 (PROT) de protection du routeur NFC 2 contre des surcharges susceptibles de provenir de bornes de recharge en champ proche ou autres champs électromagnétiques de forte puissance hors des environs des fréquences NFC, c'est-à-dire hors des fréquences de l'ordre de 13,56 MHz. On prend par la suite l'exemple de 13,56 MHz mais, plus généralement, on prévoit une protection hors des fréquences de fonctionnement du routeur de communication.

Le circuit 3 a pour rôle de limiter la tension présente sur chaque borne 22, 24 du routeur NFC 2 connectée à l'antenne 11 lorsque la fréquence captée n'est pas aux environs de 13,56 MHz.

La figure 2 représente, de façon très schématique et sous forme de blocs, un mode de réalisation d'un circuit 3 de protection d'un routeur NFC 2 contre des surcharges de potentiel.

Le circuit 3 comporte deux bornes 32 et 34 respectivement connectées aux conducteurs 22 et 24 connectant le routeur 2 à l'antenne 11. En pratique, les conducteurs 22 et 24 sont électriquement confondus aux bornes de l'antenne 11 et aux bornes d'entrée du routeur 2. Le circuit 3 comporte deux éléments 31 et 33 limiteur de tension (CLAMP) commandables, respectivement connectés aux bornes 32 et 34, et à la masse M du dispositif 1. Les limiteurs 31, 33 sont commandés par un circuit 35 de détection de présence d'un champ électromagnétique à une fréquence d'environ 13,56 MHz. Les éléments limiteurs 31 et 33 sont actifs par défaut et sont désactivés en présence d'un tel champ afin de ne pas limiter l'excursion de tension aux bornes de l'antenne 11 en présence d'un champ utile (aux environs de 13,56 MHz) ce qui autrement empêcherait un fonctionnement correct du routeur NFC 2. Le circuit 35 de détection comporte deux bornes d'entrée connectées aux bornes d'entrée du circuit 3, donc aux bornes 32 et 34 pour détecter la présence d'un champ et sa fréquence, et une borne de sortie 36 fournissant un signal de commande des limiteurs 31 et 33.

Dans l'exemple représenté, chaque élément limiteur 31, 33 comporte un interrupteur K, par exemple un transistor MOS, dont la borne de commande (la grille) est connectée à la borne 36. Chaque interrupteur K est associé en série avec une ou plusieurs diodes D entre la borne 32, respectivement 34, et la masse M. Ainsi, quand les interrupteurs K sont fermés (passants), la tension sur chaque conducteur 32, 34 est limitée à la somme des chutes de tension dans les diodes D (majorée de la chute de tension dans l'interrupteur K à l'état passant). Quand les interrupteurs K sont ouverts (bloqués), les potentiels des conducteurs 32 et 34 ne sont pas limités.

Dans l'exemple représenté, le circuit 35 comporte un circuit 352 de détection de champ (FDET) et d'extraction d'horloge (CK EXT). Le circuit 35 comporte également un comparateur 354 dont une première entrée (+) reçoit un signal du circuit 352 et dont une deuxième entrée reçoit une horloge de référence 356 (CK REF) d'environ 13,56 MHz. Une sortie du comparateur 35 (par exemple un signal numérique) constitue la sortie du circuit 35 envoyée sur les bornes de commande des interrupteurs K des éléments 31 et 33.

Le circuit 35, et plus particulièrement le comparateur 354, est alimenté par la tension Vbat de la batterie (12, figure 1) du dispositif 1, de façon à permettre un état fermé par défaut des transistors K et donc un état de protection par défaut.

La discrimination de fréquence opérée par le circuit 35 n'a pas besoin d'être précise. En effet, dans l'application visée, on cherche essentiellement à distinguer une fréquence aux alentours de 6,8 MHz d'une fréquence d'environ 13,56 MHz.

Un avantage des modes de réalisation décrits est que l'on assure une protection du routeur contre d'éventuelles surtensions aux bornes de l'antenne.

Un autre avantage des modes de réalisation décrits est que cette protection est sans impact sur le fonctionnement du routeur.

Un autre avantage des modes de réalisation décrits est qu'ils ne demandent aucune modification du routeur, ni du circuit d'antenne. Ils sont donc compatibles avec les dispositifs actuels.

Divers modes de réalisation ont été décrits, diverses variantes et modifications apparaîtront à l'homme de l'art. En particulier, bien que les modes de réalisation aient été décrits en relation avec un exemple d'application à une fréquence de 13,56 MHz, ils s'appliquent plus généralement à une protection du routeur par limitation de la tension sur chaque borne de l'antenne en dehors des environs d'une fréquence de fonctionnement du routeur. En outre, la mise en oeuvre pratique des modes de réalisation et le dimensionnement des composants est à la portée de l'homme du métier à partir de la description fonctionnelle donnée ci-dessus et les structures données pour les circuits 31, 33 et 35 ne sont que des exemples et peuvent être modifiées pourvu d'assurer la même fonction.

## Revendications

1. Dispositif (3) de protection d'un routeur (2) de communication en champ proche contre d'éventuelles surtensions captées par une antenne (11), comportant :
deux éléments (31, 33) limiteurs de tension entre des bornes (32, 34) de l'antenne et une masse (M) ; et
un circuit (35) de détection de présence d'un champ électromagnétique aux environs d'une fréquence de fonctionnement du routeur, et de commande des éléments limiteurs, les éléments limiteurs étant actifs par défaut, le circuit de détection (35) comportant :
un élément (352) de détection de champ et d'extraction d'horloge ; et
un comparateur (354), commandant les éléments limiteurs, et dont une première entrée reçoit un signal de l'élément de détection et dont une deuxième entrée reçoit une horloge de référence (356) correspondant approximativement à ladite fréquence de fonctionnement du routeur (2).

2. Dispositif selon la revendication 1, dans lequel chaque élément limiteur (31, 33) comporte un ou plusieurs composants (D) limiteur de tension, en série avec un interrupteur (K) commandable par le circuit de détection (35).

3. Dispositif selon la revendication 1 ou 2, dans lequel le circuit de détection (35) est alimenté par une batterie (12).

4. Dispositif selon l'une quelconque des revendications 1 à 3, dans lequel la fréquence de fonctionnement du routeur (2) est d'environ 13,56 MHz.

5. Dispositif (1) de communication en champ proche, comportant :
au moins une antenne (11) ;
un routeur (2) de communication en champ proche connecté à l'antenne ; et
un dispositif (3) de protection selon l'une quelconque des revendications 1 à 4.

6. Dispositif portable de communication comportant un dispositif de protection selon l'une quelconque des revendications 1 à 4.

7. Dispositif portable de communication comportant un dispositif de communication en champ proche selon la revendication 5.

## Patentansprüche

1. Vorrichtung (3) zum Schutz eines Nahfeldkommunikations-Routers (2) gegenüber möglichen Überspannungen, die von einer Antenne (11) aufgenommen werden, die Folgendes aufweist:
zwei Spannungsbegrenzungselemente (31, 33) zwischen Anschlüssen (32, 34) der Antenne und Masse (M); und
eine Schaltung (35) zum Detektieren des Vorhandenseins eines elektromagnetischen Feldes in der Nähe einer Betriebsfrequenz des Routers und zum Steuern der Begrenzungselemente, wobei die Begrenzungselemente standardmäßig aktiv sind und die Detektionsschaltung (35) Folgendes aufweist:
ein Element (352) zur Felddetektion und zur Taktextraktion; und
einen Komparator (354), der die Begrenzungselemente steuert, mit einem ersten Eingang, der ein Signal von dem Detektionselement empfängt, und mit einem zweiten Eingang, der einen Referenztakt (356) empfängt, der ungefähr der Betriebsfrequenz des Routers (2) entspricht.

2. Vorrichtung nach Anspruch 1, wobei jedes Begrenzungselement (31, 33) eine oder mehrere Spannungsbegrenzungskomponenten (D) in Reihe mit einem von der Detektionsschaltung (35) steuerbaren Schalter (K) aufweist.

3. Vorrichtung nach Anspruch 1 oder 2, wobei die Detektionsschaltung (35) von einer Batterie (12) mit Leistung versorgt wird.

4. Vorrichtung nach einem der Ansprüche 1 bis 3, wobei die Betriebsfrequenz des Routers (2) etwa 13,56 MHz beträgt.

5. Nahfeldkommunikationsvorrichtung (1), aufweisend:
wenigstens eine Antenne (11);
einen Nahfeldkommunikations-Router (2), der mit der Antenne verbunden ist; und
eine Schutzvorrichtung (3) nach einem der Ansprüche 1 bis 4.

6. Tragbare Kommunikationsvorrichtung, die eine Schutzvorrichtung nach einem der Ansprüche 1 bis 4 aufweist.

7. Tragbares Kommunikationsvorrichtung, die eine eine Nahfeldkommunikationsvorrichtung nach Anspruch 5 aufweist.

## Claims

1. Device (3) for protecting a near field communication router (2) against possible overvoltages picked up by an antenna (11), comprising:
two voltage-limiter elements (31, 33) between terminals (32, 34) of the antenna and a ground (M); and
a circuit (35) for detecting presence of an electromagnetic field in the vicinity of an operating frequency of the router, and for controlling the limiter elements, the limiter elements being active by default, the detection circuit (35) comprising:
an element (352) for field detection and clock extraction; and
a comparator (354) controlling the limiter elements, and a first input of which receives a signal from the detection element and a second input of which receives a reference clock (356) corresponding approximately to the said operating frequency of the router (2).

2. Device according to claim 1, in which each limiter element (31, 33) comprises one or more voltage-limiter components (D), in series with a switch (K) controllable by the detection circuit (35) .

3. Device according to claim 1 or 2, in which the detection circuit (35) is powered by a battery (12).

4. Device according to any one of claims 1 to 3, in which the operating frequency of the router (2) is about 13.56 MHz.

5. Near field communication device (1), comprising:
at least one antenna (11);
a near field communication router (2) connected to the antenna; and
a protection device (3) according to any one of claims 1 to 4.

6. Portable communication device comprising a protection device according to any one of claims 1 to 4.

7. Portable communication device comprising a near field communication device according to claim 5.
